(19) Europäisches Patentamt / European Patent Office / Office européen des brevets

(11) **EP 3 639 009 B1**

(12) **FASCICULE DE BREVET EUROPEEN**

(45) Date de publication et mention de la délivrance du brevet:
**28.02.2024 Bulletin 2024/09**

(21) Numéro de dépôt: **18733214.3**

(22) Date de dépôt: **15.06.2018**

(51) Classification Internationale des Brevets (IPC):
**G01N 21/17** *(2006.01)*  **G01N 29/02** *(2006.01)*
**G01N 29/14** *(2006.01)*  **G01N 29/24** *(2006.01)*

(52) Classification Coopérative des Brevets (CPC):
**G01N 21/1702; G01N 29/02; G01N 29/14;**
**G01N 29/2425;** G01N 2021/1704; G01N 2291/021

(86) Numéro de dépôt international:
**PCT/EP2018/065936**

(87) Numéro de publication internationale:
**WO 2018/229248 (20.12.2018 Gazette 2018/51)**

(54) **DISPOSITIF PHOTOACOUSTIQUE DE DÉTECTION DE GAZ ET PROCÉDÉ DE FABRICATION D'UN TEL DISPOSITIF**

PHOTOAKUSTISCHE VORRICHTUNG ZUR GASDETEKTION UND VERFAHREN ZU IHRER HERSTELLUNG

PHOTOACOUSTIC DEVICE FOR GAS DETECTION AND METHOD OF FABRICATING SAID DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.06.2017 FR 1755471**

(43) Date de publication de la demande:
**22.04.2020 Bulletin 2020/17**

(73) Titulaire: **Commissariat à l'Énergie Atomique et aux Énergies Alternatives**
**75015 Paris (FR)**

(72) Inventeur: **GLIERE, Alain**
**38000 Grenoble (FR)**

(74) Mandataire: **Cabinet Camus Lebkiri**
**25 rue de Maubeuge**
**75009 Paris (FR)**

(56) Documents cités:
**EP-A1- 1 211 501        EP-A1- 2 515 096**
**WO-A1-2017/044436        FR-A1- 2 599 505**
**US-A1- 2008 204 757        US-B1- 7 304 732**

• **NICOLETTI S ET AL: "Challenges in the realization of a fully integrated optical lab-on-chip", IEEE SENSORS 2014 PROCEEDINGS, IEEE, 2 novembre 2014 (2014-11-02), pages 649-652, XP032705458, DOI: 10.1109/ICSENS.2014.6985082**

EP 3 639 009 B1

## Description

### DOMAINE TECHNIQUE DE L'INVENTION

Le domaine technique de l'invention est celui de la détection de gaz.

La présente invention concerne un dispositif photoacoustique de détection de gaz, ainsi qu'un procédé de fabrication d'un tel dispositif.

### ARRIERE-PLAN TECHNOLOGIQUE DE L'INVENTION

Pour détecter un gaz au moyen d'un dispositif photoacoustique classique, on crée une onde acoustique dans un gaz au moyen d'une source de lumière modulée qui est généralement un laser. La longueur d'onde du rayonnement de la source de lumière est choisie pour interagir spécifiquement avec les molécules du gaz à détecter. En présence du gaz à détecter, une interaction a donc lieu entre des molécules dudit gaz et le rayonnement lumineux, qui se traduit par une absorption d'énergie du rayonnement lumineux par lesdites molécules. Les molécules ayant absorbé de l'énergie restituent ensuite cette énergie sous forme d'un échauffement. La source de lumière étant modulée, l'échauffement formé génère une onde de pression qui peut être mesurée par un microphone. On détecte ainsi l'absence ou la présence en plus ou moins grande quantité d'un gaz particulier.

Par rapport aux techniques de spectroscopie d'absorption, un avantage de la technique photoacoustique est qu'en l'absence du gaz à détecter, le signal acoustique mesuré est nul. En présence de traces du gaz à détecter, on mesure donc un petit signal sur fond nul, ce qui est très favorable quant au rapport signal sur bruit.

En pratique toutefois, le gaz à détecter étant confiné dans une chambre (résonante ou non), un signal de fond parasite apparaît, qui est également appelé « signal de paroi ». En effet, la chambre comporte des parois réalisées en un matériau solide qui absorbe également la lumière modulée. La chambre comporte également des fenêtres d'entrée et de sortie réalisées en un matériau transparent au rayonnement lumineux de la source de lumière ; toutefois, les fenêtres d'entrée et de sortie sont également responsables de l'apparition d'un signal de paroi si leur matériau est imparfaitement transparent au rayonnement lumineux de la source de lumière. L'interaction de la lumière avec le matériau solide crée alors un signal photoacoustique selon deux processus :

- un effet thermique, dû à l'échauffement par les parois d'une couche de gaz proche des parois, et
- un effet acoustique, dû au mouvement des parois sous l'effet de leur échauffement et donc de leur dilatation périodique. Cet effet acoustique est négligeable pour les parois très opaques, par exemple les parois métalliques, qui n'absorbent le rayonnement que dans une très fine couche près de leur surface.

Le signal photoacoustique de paroi est déphasé par rapport au signal photoacoustique utile dû au gaz, mais il est à la même fréquence que lui. Il ne peut donc pas être éliminé par une technique de détection synchrone, asservie sur la modulation de la source laser, traitant le signal mesuré par le microphone.

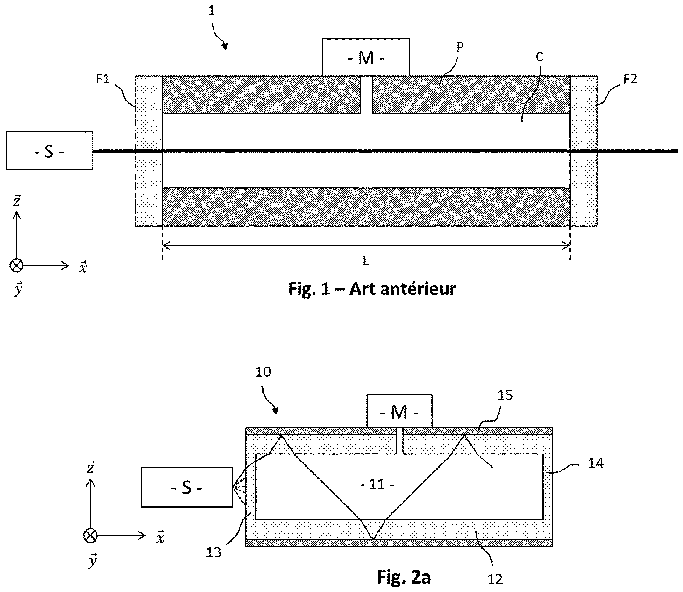

Pour s'affranchir du signal de paroi dans un dispositif photoacoustique de détection de gaz, il est connu d'utiliser un faisceau lumineux collimaté et une chambre de confinement du gaz ayant des fenêtres d'entrée et de sortie en un matériau transparent à la longueur d'onde du faisceau lumineux considéré. La figure 1 montre ainsi un dispositif photoacoustique 1 de détection de gaz selon l'art antérieur. Le dispositif photoacoustique 1 comporte une chambre ayant une paroi P définissant un espace confiné C. Une source de lumière S, qui émet un faisceau lumineux collimaté, est agencée au niveau d'une première extrémité de la chambre afin que le faisceau lumineux collimaté soit aligné avec la cavité de la chambre. Une première fenêtre F1 transparente pour le faisceau lumineux collimaté est agencée à une première extrémité de la chambre et une deuxième fenêtre F2 transparente pour le faisceau collimaté est agencée à une deuxième extrémité de la chambre. Le faisceau lumineux collimaté peut ainsi pénétrer dans la cavité de la chambre par la première fenêtre transparente F1 et en ressortir par la deuxième fenêtre transparente F2. Un gaz à étudier est introduit dans la cavité C. Un microphone M est prévu pour mesurer un signal photoacoustique.

Comme le faisceau lumineux est collimaté et aligné avec la chambre, il traverse la cavité C sans atteindre ses parois P ce qui permet d'éliminer le signal de paroi.

Un tel dispositif est toutefois mono-passage, c'est-à-dire que le faisceau lumineux traverse une seule fois la cavité. Autrement dit, la longueur d'interaction du faisceau lumineux collimaté avec le gaz à étudier est égale à la longueur L de la cavité C. Cela a pour inconvénient de réduire le signal photoacoustique utile, qui est d'autant plus faible que la longueur d'interaction est faible.

La demande FR 3 017 950 - A1 décrit, dans ses premier, deuxième, troisième, quatrième, cinquième, septième et huitième modes de réalisation, des configurations multi-passages dans lesquelles le faisceau lumineux collimaté n'atteint pas les parois de la cavité, grâce à un système de miroirs. Ces configurations permettent d'augmenter la longueur d'interaction tout en éliminant le signal de paroi. Toutefois, ces configurations mettent en oeuvre une cuve résonante de dimensions macroscopiques, environ un carré de 10 cm de côté. Elles ne sont pas transposables à des dispositifs photoacoustiques de plus petite taille, pour lesquels la collimation est difficile le système de miroirs étant difficile à réaliser et positionner.

On note qu'un sixième mode de réalisation est également décrit dans la demande FR 3 017 950 - A1, qui propose une configuration multi-passages dans laquelle le faisceau lumineux se reflète sur les parois de la cavité : le sixième mode de réalisation augmente la longueur d'interaction mais génère un signal de paroi.

Les documents WO 2017/044436 A1 et FR 2 599 505 A1 divulguent des dispositifs photoacoustiques comprenant une cavité photoacoustique, une source de lumière et un microphone. La cavité photoacoustique est réalisée en un matériau transparent au rayonnement lumineux de la source de lumière et un miroir est agencé sur au moins une partie d'une surface externe d'une paroi de la cavité photoacoustique. D'autres dispositifs photoacoustiques sont décrits dans les documents EP 1 211 501 A1, US 2008/204757 A1, EP 2 515 096 A1, US 7,304,732 B1 et S. Nicoletti et al., Challenges in the realization of a fully integrated optical lab-on-chip, Proc. IEEE Sensors 2014, 649-652.

## RESUME DE L'INVENTION

Il est donc recherché une solution pour augmenter la longueur d'interaction tout en éliminant le signal de paroi dans un dispositif photoacoustique de détection de gaz, la solution étant notamment applicable aux dispositifs photoacoustiques de petite taille.

Un premier aspect de l'invention concerne un dispositif photoacoustique de détection de gaz comportant :

- une première cavité photoacoustique ayant une paroi latérale s'étendant entre une première extrémité et une deuxième extrémité et présentant une surface interne et une surface externe ;
- un miroir agencé sur au moins une partie de la surface externe de la paroi latérale de la première cavité photoacoustique ;
- une source de lumière apte à émettre un rayonnement lumineux fournissant une énergie d'excitation à un gaz contenu dans la première cavité photoacoustique, le rayonnement lumineux étant modulé à une pulsation $\omega$, la source de lumière étant couplée à la première extrémité de la première cavité photoacoustique, la première cavité photoacoustique étant réalisée en un matériau transparent au rayonnement de la source de lumière ;
- un premier microphone couplé à la paroi latérale de la première cavité photoacoustique,

le dispositif étant caractérisé en ce que :

- le matériau transparent au rayonnement lumineux de la source de lumière est choisi parmi la silice, le silicium, le germanium, le phosphure d'indium ou le nitrure d'aluminium ;
- la paroi latérale de la première cavité photoacoustique présente une épaisseur e12 qui est choisie en fonction de la profondeur de pénétration $\delta$ d'une onde thermique provenant du miroir dans ledit matériau transparent, de manière qu'une telle onde thermique soit atténuée avant de parvenir au sein de la première cavité photoacoustique, la profondeur de pénétration $\delta$ étant définie par : $\delta = (2\alpha/\omega)^{1/2}$ avec $\alpha$ la diffusivité thermique du matériau transparent et $\omega$ la pulsation de la source de lumière ;

- la surface externe de la paroi latérale de la première cavité photoacoustique est de forme parallélépipédique, et le miroir est agencé sur les deux faces horizontales de la surface externe de la paroi latérale de la première cavité photoacoustique et un deuxième miroir est agencé parallèlement, à une distance égale à l'épaisseur e12, aux deux faces verticales de la surface externe de la paroi latérale de la première cavité photoacoustique.

Dans le cadre de l'invention, on construit la cavité photoacoustique dans un matériau transparent au rayonnement lumineux de la source de lumière. Ainsi, on permet que le rayonnement lumineux atteigne la surface interne de la paroi latérale sans que le matériau de la cavité photoacoustique n'absorbe le rayonnement lumineux et donc sans que le matériau de la cavité photoacoustique ne s'échauffe. En agençant un miroir sur au moins une partie de la surface externe de la paroi latérale de la cavité photoacoustique, on permet un confinement du rayonnement dans la cavité photoacoustique et donc une configuration multi-passages. On tient compte de la profondeur de pénétration d'une onde thermique provenant du miroir dans ledit matériau transparent afin de choisir une épaisseur de la paroi latérale de la cavité photoacoustique suffisante pour atténuer une telle onde thermique. Ainsi, un échauffement du miroir par le rayonnement lumineux est transmis localement, sous forme d'une onde thermique, au matériau transparent de la paroi latérale au contact dudit miroir, mais est partiellement ou complètement atténué dans l'épaisseur de ladite paroi latérale. La cavité photoacoustique ne subit donc qu'un échauffement de paroi négligeable ou pas d'échauffement de paroi du tout.

Le dispositif photoacoustique de détection de gaz selon un aspect de l'invention permet donc d'augmenter la longueur d'interaction du rayonnement lumineux avec un gaz contenu dans la cavité photoacoustique, sans nécessiter une collimation du rayonnement lumineux et sans utiliser un système non miniaturisable de miroirs à la géométrie et/ou au positionnement complexe. Le dispositif photoacoustique de détection de gaz selon un aspect de l'invention permet ainsi l'utilisation d'une cavité photoacoustique miniature, même si l'utilisation d'une cavité photoacoustique de plus grandes dimensions reste possible. On entend par cavité photoacoustique miniature une cavité photoacoustique de longueur inférieure ou égale à 5 cm, préférentiellement inférieure ou égale à 3 cm, encore plus préférentiellement inférieure ou égale à 2 cm, encore plus préférentiellement inférieure ou égale à 1 cm.

Outre les caractéristiques qui viennent d'être évoquées dans le paragraphe précédent, le dispositif photoacoustique selon un aspect de l'invention peut présenter une ou plusieurs caractéristiques complémentaires parmi les suivantes, considérées individuellement ou selon toutes les combinaisons techniquement possibles :

- La paroi latérale présente avantageusement une épaisseur e12 qui est telle que :

$$e12 \geq \delta$$

En effet, l'amplitude d'une onde thermique diminue en se propageant dans un matériau et on constate qu'une onde thermique provenant du miroir et se propageant dans le matériau transparent de la paroi latérale subit une atténuation en amplitude de 1 - exp(-1) soit environ 63% avant de parvenir dans la cavité, pour une distance de propagation de $\delta$ dans le matériau transparent de la paroi latérale.
- L'épaisseur e12 de la paroi latérale est encore plus avantageusement telle que :

$$e12 \geq 2\pi\delta$$

En effet, on constate qu'une onde thermique provenant du miroir et se propageant dans le matériau transparent de la paroi latérale subit une atténuation en amplitude de 1 - exp(-2π), soit environ 99,8% avant de parvenir dans la cavité, pour une distance de propagation de $2\pi\delta$ dans le matériau transparent de la paroi latérale.
- Par ailleurs, l'épaisseur e12 de la paroi latérale est préférentiellement telle que :

$$e12 \leq 10\delta$$

En effet, il n'est pas utile que l'épaisseur e12 de la paroi latérale soit supérieure à $10\delta$ car au-delà de cette épaisseur, l'atténuation est quasi-totale ou totale et ne s'améliore plus significativement ou plus du tout. On préfère donc ne pas augmenter l'épaisseur e12 de la paroi latérale au-delà de $10\delta$ pour conserver une cavité photoacoustique la plus miniature possible.
- Selon l'invention, le miroir est agencé sur les deux faces horizontales de la surface externe de la paroi latérale de la cavité photoacoustique et un deuxième miroir est agencé parallèlement, à une distance égale à l'épaisseur e12, aux deux faces verticales de la surface externe de la paroi latérale de la cavité photoacoustique. Cela permet d'obtenir l'amélioration significative de l'ordre de 80% du signal photoacoustique utile sans augmentation du signal parasite de paroi comme dans la deuxième configuration, tout en étant compatible avec une fabrication par une technologie microsystème électromécanique MEMS.
- La cavité photoacoustique comporte préférentiellement une première couche antireflet agencée sur au moins une partie de la surface externe de sa première extrémité, et/ou une deuxième couche antireflet agencée sur au moins une partie de la surface interne de sa première extrémité.
- La source de lumière émet préférentiellement un rayonnement lumineux ayant une divergence supérieure ou égale à 20°.
- La source de lumière est préférentiellement une source laser à cascade quantique QCL.
- La cavité photoacoustique présente une longueur, mesurée entre les surfaces internes des première et deuxième extrémités, inférieure à 5 cm, préférentiellement inférieure à 3 cm, plus préférentiellement inférieure à 2 cm, encore plus préférentiellement inférieure à 1 cm.
- Selon un mode de réalisation, le dispositif photoacoustique comporte en outre :

  - une deuxième cavité photoacoustique et des premier et deuxième capillaires permettant de faire communiquer les volumes des première et deuxième cavités photoacoustiques entre eux de manière à former une cavité photoacoustique résonante de type Helmholtz différentielle ;
  - un deuxième microphone couplé à la deuxième cavité photoacoustique.
- Ce -dispositif photoacoustique comporte préférentiellement un canal d'entrée permettant d'amener le gaz dans les première et deuxième cavités photoacoustiques via le premier capillaire et un canal de sortie permettant d'évacuer le gaz hors des première et deuxième cavités photoacoustiques via le deuxième capillaire.

Un deuxième aspect de l'invention concerne un procédé de fabrication d'un dispositif photoacoustique selon le premier aspect de l'invention, comportant les étapes suivantes :

- une première étape selon laquelle une première demi-cavité est gravée dans une première galette du matériau transparent au rayonnement lumineux de la source de lumière choisi parmi la silice, le silicium, le germanium, le phosphure d'indium ou le nitrure d'aluminium et une deuxième demi-cavité est gravée dans une deuxième galette du matériau transparent ;
- une deuxième étape selon laquelle les première et deuxième galettes gravées sont assemblées de manière à former, à partir des première et deuxième demi-cavités, une première cavité photoacoustique de forme parallélépipédique entière présentant une première extrémité, une deuxième extrémité et une paroi latérale entre les première et deuxième extrémités, la paroi latérale présentant une surface interne et une surface externe ;

- une troisième étape selon laquelle un miroir est déposé sur la surface externe de la paroi latérale de la première cavité photoacoustique, le miroir étant agencé sur les deux faces horizontales de la surface externe de la paroi latérale de la première cavité photoacoustique ;

- une quatrième étape selon laquelle le miroir est structuré par gravure locale de manière à créer dans le miroir au moins une première structuration, une deuxième structuration et une troisième structuration ;

- une cinquième étape selon laquelle la paroi latérale de la cavité photoacoustique est structurée par gravure profonde à l'aplomb des première et deuxième structurations du miroir, de manière à former une première ouverture à l'aplomb de la première structuration, une deuxième ouverture à l'aplomb de la deuxième structuration et une troisième ouverture à l'aplomb de la troisième structuration, les première, deuxième et troisième ouvertures débouchant dans la première cavité photoacoustique ;

- l'épaisseur e12 de la paroi latérale étant choisie en fonction de la profondeur de pénétration $\delta$ d'une onde thermique provenant du miroir dans ledit matériau transparent, de manière qu'une telle onde thermique soit atténuée avant de parvenir au sein de la première cavité photoacoustique, la profondeur de pénétration $\delta$ étant définie par : $\delta = (2\alpha/\omega)^{1/2}$ avec $\alpha$ la diffusivité thermique du matériau transparent et $\omega$ la pulsation de la source de lumière ;

- la source de lumière étant couplée à la première extrémité de la première cavité photoacoustique et le premier microphone étant couplé à la paroi latérale de la première cavité photoacoustique, ledit procédé comportant en outre, préalablement à la première étape :

- une première sous-étape selon laquelle une première tranchée est gravée dans la première galette et une deuxième tranchée est gravée dans la deuxième galette ;

- une deuxième sous-étape selon laquelle une couche d'un réflecteur est déposée sur les première et deuxième galettes de manière à remplir les première et deuxième tranchées, puis un polissage mécano-chimique est effectué afin de ne conserver que le réflecteur remplissant les première et deuxième tranchées, de manière à réaliser le deuxième miroir agencé parallèlement, à une distance égale à l'épaisseur e12, aux deux faces verticales de la surface externe de la paroi latérale de la première cavité photoacoustique.

L'invention, qui est définie par les revendications, et ses différentes applications seront mieux comprises à la lecture de la description qui suit et à l'examen des figures qui l'accompagnent.

**BREVE DESCRIPTION DES FIGURES**

Les figures sont présentées à titre indicatif et nullement limitatif de l'invention.

- La figure 1 montre une représentation schématique d'un dispositif photoacoustique de détection de gaz selon l'art antérieur.

- La figure 2a montre une représentation schématique d'un dispositif photoacoustique de détection de gaz comportant une cavité photoacoustique d'un type quelconque, utilisée à sa fréquence de résonance.

- La figure 2b montre une représentation schématique d'un dispositif photoacoustique de détection de gaz comportant une cavité photoacoustique résonante de type Helmholtz différentielle.

- La figure 3a montre une représentation schématique d'un premier mode de réalisation d'une cavité photoacoustique du dispositif photoacoustique de la figure 2a, dans lequel un découplage thermique est permis par une paroi latérale de la cavité photoacoustique.

- La figure 3b montre une représentation schématique d'un deuxième mode de réalisation de la cavité photoacoustique du dispositif photoacoustique de la figure 2a, dans lequel un découplage thermique est permis par la paroi latérale et par une extrémité de la cavité photoacoustique.

- La figure 3c montre une représentation schématique d'un troisième mode de réalisation de la cavité photoacoustique du dispositif photoacoustique de la figure 2a, dans lequel un découplage thermique est permis par la paroi latérale et par des première et deuxième extrémités de la cavité photoacoustique.

- La figure 4a est une vue en coupe qui montre un exemple de géométrie parallélépipédique pour la cavité photoacoustique des figures 3a, 3b ou 3c.

- La figure 4b est une vue en coupe qui montre un exemple de géométrie cylindrique pour la cavité photoacoustique des figures 3a, 3b ou 3c.

- La figure 5a est une vue schématique en coupe d'une cavité photoacoustique de géométrie parallélépipédique, dans une première configuration selon laquelle un miroir est agencé sur deux faces externes opposées de la paroi latérale de la cavité photoacoustique.

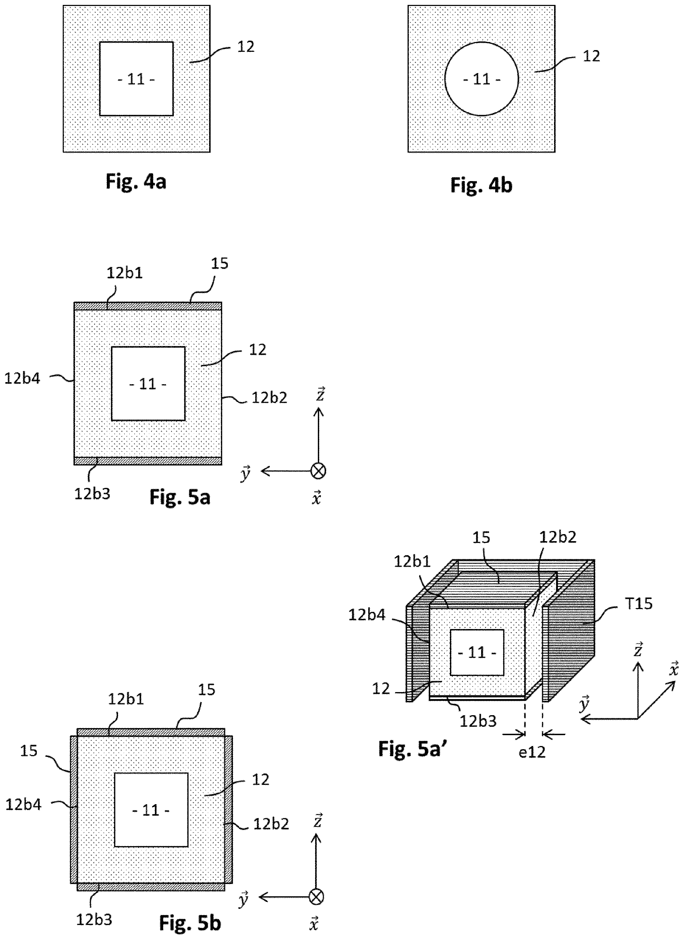

- La figure 5a' est une vue schématique en perspective et en coupe d'une cavité photoacoustique de géométrie parallélépipédique selon un perfectionnement de la première configuration de la figure 5a.

- La figure 5b est une vue schématique en coupe d'une cavité photoacoustique de géométrie parallélépipédique, dans une deuxième configuration selon laquelle un miroir est agencé sur les quatre faces externes de la paroi latérale de la cavité photoacoustique.

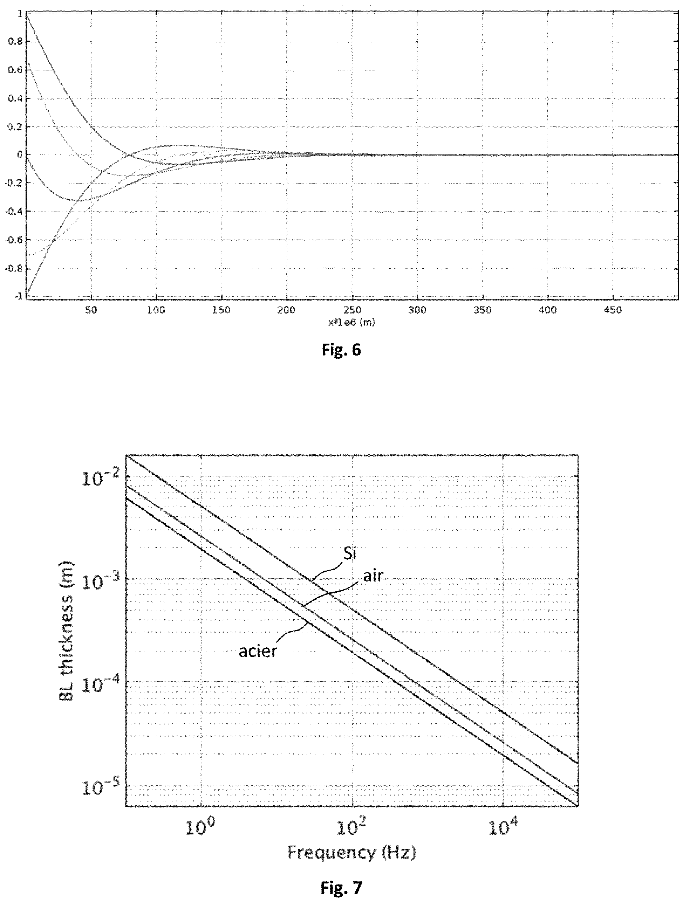

- La figure 6 est un graphique de l'évolution de la température d'un matériau chauffé à sa surface, en fonction de la profondeur du matériau.
- La figure 7 est un graphique de l'évolution d'une onde thermique au sein de différents matériaux, en fonction de la fréquence d'une source thermique chauffant lesdits matériaux.

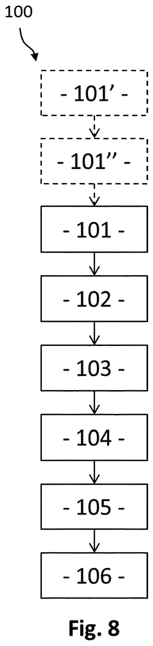

- La figure 8 montre un diagramme des étapes d'un procédé de fabrication d'un dispositif photoacoustique de détection de gaz selon un aspect de l'invention.

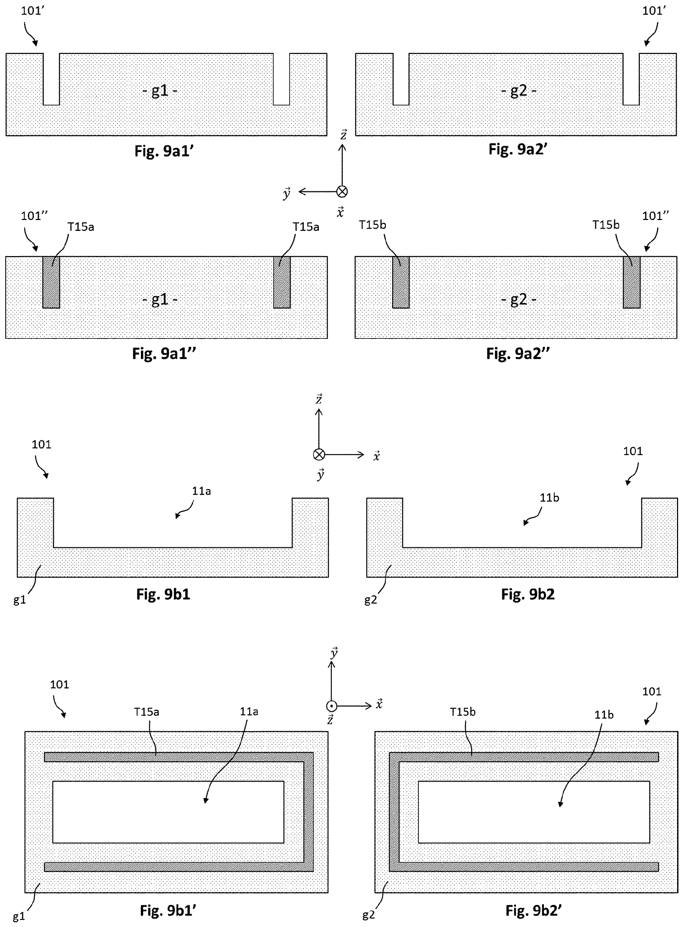

- Les figures 9a1', 9a2', 9a1" et 9a2" montrent des première et deuxième sous-étapes, obligatoires selon l'invention, du procédé de fabrication de la figure 8, selon laquelle on grave une tranchée en forme de U, que l'on remplit d'un réflecteur.
- Les figures 9b1 et 9b2 montrent une première étape du procédé de fabrication de la figure 8, selon laquelle des première et deuxième demi-cavités sont gravées.
- Les figures 9b1' et 9b2' montrent respectivement une vue de dessus des figures 9b1 et 9b2, lorsque l'étape des figures 9a1', 9a2', 9a1", 9a2" a été réalisée.

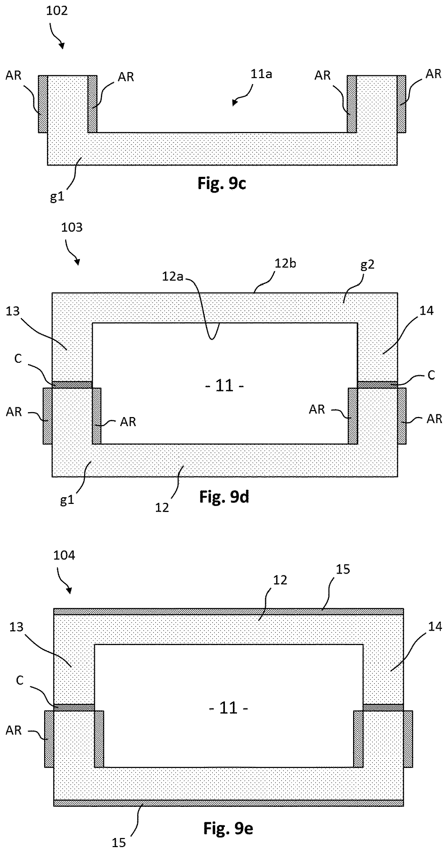

- La figure 9c montre une deuxième étape du procédé de fabrication de la figure 8.
- La figure 9d montre une troisième étape du procédé de fabrication de la figure 8.
- La figure 9e montre une quatrième étape du procédé de fabrication de la figure 8.

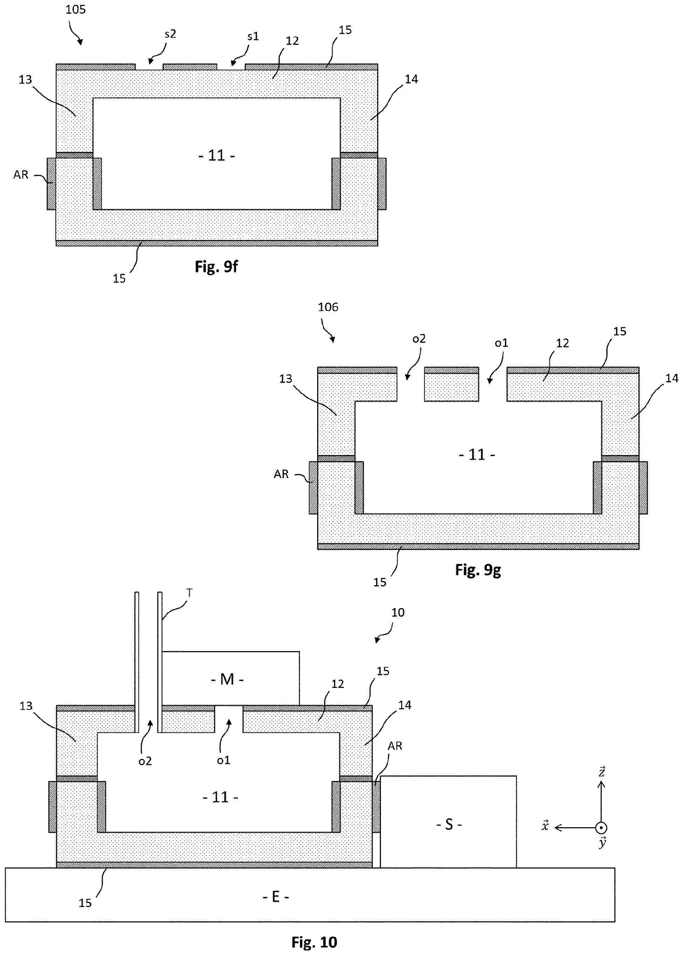

- La figure 9f montre une cinquième étape du procédé de fabrication de la figure 8.
- La figure 9g montre une sixième étape du procédé de fabrication de la figure 8.
- La figure 10 montre une représentation schématique d'un dispositif photoacoustique de détection de gaz susceptible d'être obtenu par le procédé de fabrication de la figure 8.

**DESCRIPTION DETAILLEE D'AU MOINS UN MODE DE REALISATION DE L'INVENTION**

Sauf précision contraire, un même élément apparaissant sur des figures différentes présente une référence unique.

Un repère d'axes $\vec{x}$, $\vec{y}$, $\vec{z}$ est régulièrement représenté sur les figures afin de définir leur orientation et faciliter leur lecture.

La figure 1, qui montre une représentation schématique d'un dispositif photoacoustique 1 de détection de gaz selon l'art antérieur, a été précédemment décrite.

La figure 2a montre une représentation schématique d'un dispositif photoacoustique 10 de détection de gaz qui comporte une source de lumière S, une cavité photoacoustique 11 et un microphone M.

La source de lumière S est apte à émettre un rayonnement lumineux modulé à une pulsation $\omega$ et fournissant une énergie d'excitation à un gaz contenu dans la cavité photoacoustique 11. La source de lumière S est typiquement une source de lumière laser. La source de lumière S peut avoir une divergence importante, typiquement supérieure ou égale à 20°, voire supérieure ou égale à 30°, voire supérieure ou égale à 40°. La source de lumière S est préférentiellement une source laser à cascade quantique QCL, qui présente typiquement une divergence de l'ordre de 40°. On choisit généralement une source de lumière émettant un rayonnement infrarouge, proche ou moyen. Un rayonnement infrarouge proche a une longueur d'onde comprise entre 0,78 et 3 $\mu$m, tandis qu'un rayonnement infrarouge moyen a une longueur d'onde comprise entre 3 et 20 $\mu$m.

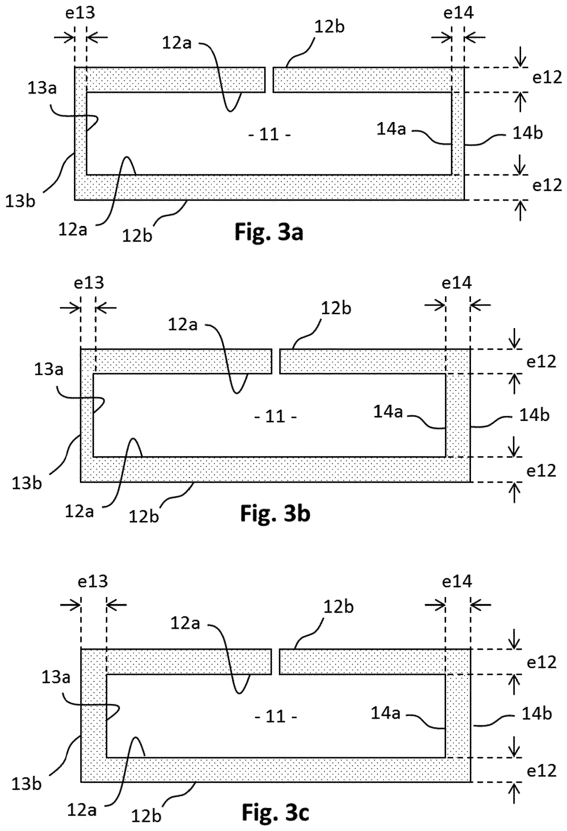

La cavité photoacoustique 11 est réalisée dans un matériau transparent au rayonnement lumineux émis par la source de lumière S et comporte une première extrémité 13, une deuxième extrémité 14 et une paroi latérale 12 s'étendant entre les première et deuxième extrémités 13, 14. La source de lumière S est couplée avec l'une des première ou deuxième extrémités 13, 14 : dans l'exemple de la figure 2a, la source de lumière S est couplée avec la première extrémité 13. La paroi latérale 12 est typiquement perpendiculaire aux première et deuxième extrémités 13, 14. Comme représenté sur les figures 3a, 3b et 3c, la paroi latérale 12 présente une surface interne 12a, une surface externe 12b. La paroi latérale 12 a une épaisseur e12 mesurée entre ses surfaces interne 12a et externe 12b, perpendiculairement auxdites surfaces interne 12a et externe 12b. La première extrémité 13 présente une surface interne 13a et une surface externe 13b ; la deuxième extrémité 14 présente une surface interne 14a et une surface externe 14b. La première extrémité a une épaisseur e13 mesurée entre ses surfaces interne 13a et externe 13b, perpendiculairement auxdites surfaces interne 13a et interne 13b. La deuxième extrémité a une épaisseur e14 mesurée entre ses surfaces interne 14a et externe 14b, perpendiculairement auxdites surfaces interne 14a et externe 14b.

Un miroir 15 est agencé sur au moins une partie de la surface externe 12b de la paroi latérale 12. Le miroir 15 est par exemple une couche métallique. Un miroir peut également être agencé sur tout ou partie de la surface externe 13b de la première extrémité et/ou sur tout ou partie de la surface externe 14b de la deuxième extrémité.

Une couche antireflet peut avantageusement être agencée sur la surface externe 13b de la première extrémité 13 de la cavité photoacoustique 11 qui est couplée avec la source de lumière S, de manière à éviter une perte de rayonnement lumineux à l'interface entre le milieu extérieur, typiquement l'air ambiant, et la première extrémité 13 de la cavité photoacoustique 11 en matériau transparent. Par exemple, en l'absence de couche antireflet, 30% du rayonnement lumineux incident sur une interface air/silicium est réfléchi donc perdu.

Selon l'invention, le matériau transparent au rayonnement émis par la source de lumière S est choisi parmi la silice, le silicium, le germanium, le phosphure d'indium ou le nitrure d'aluminium.

Pour une longueur d'onde d'intérêt inférieure à 3,5 $\mu$m, voire inférieure à 2 $\mu$m, le matériau transparent est préférentiellement de la silice. En effet, la silice est transparente au rayonnement infrarouge tel que précédemment défini tout en étant compatible avec les technologies de fabrication des microsystèmes électromécaniques MEMS. Pour une longueur d'onde d'intérêt dans l'intervalle [1 $\mu$m ; 10 $\mu$m], le matériau transparent est préférentiellement du silicium Si. En effet, le silicium est transparent au rayonnement infrarouge tel que précédemment défini tout en étant compatible avec les technologies de fabrication des microsystèmes électromécaniques MEMS. Pour une longueur d'onde d'intérêt dans l'intervalle [2 $\mu$m ; 17 $\mu$m], le matériau transparent est préférentiellement du germanium. En effet, le germanium est transparent au rayonnement infrarouge tel que précédemment défini tout en étant compatible avec les technologies de fabrication des systèmes électromécaniques MEMS. Pour une longueur d'onde d'intérêt dans l'intervalle [2 $\mu$m ; 10 $\mu$m], le matériau transparent est préférentiellement du phosphure d'indium InP. En effet, le phosphure d'indium InP est transparent au rayonnement tel que précédemment défini tout en étant compatible avec les technologies de fabrication des systèmes électromécaniques MEMS. Pour une longueur d'onde d'intérêt dans l'intervalle [2 $\mu$m ; 7 $\mu$m], le matériau transparent est préférentiellement du nitrure d'aluminium AlN. En effet, le nitrure d'aluminium AlN est transparent au rayonnement tel que précédemment défini tout en étant compatible avec les technologies de fabrication des systèmes électromécaniques MEMS.

La paroi latérale 12 présente une ouverture avec laquelle le microphone M est couplé. L'ouverture est préférentiellement agencée au milieu de la cavité photoacoustique 11, c'est-à-dire à égale distance de ces première et deuxième extrémités 13, 14, car dans une cavité standard non résonante, ce positionnement correspond à un ventre de pression du mode fondamental de l'onde acoustique. Dans une cavité résonante de type Helmholtz, la pression est uniforme et le positionnement de l'ouverture pour le couplage du microphone est indifférent, toutefois on conserve typiquement en pratique un positionnement du microphone au milieu de la cavité résonante.

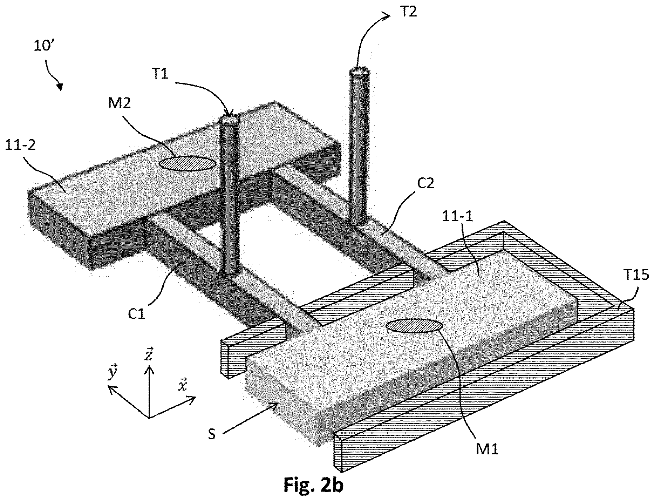

La figure 2b montre une représentation schématique d'un dispositif photoacoustique 10' de détection de gaz selon un mode de réalisation alternatif.

Le dispositif photoacoustique 10' comporte :

- la source de lumière S
- une première cavité photoacoustique 11-1 ;
- une deuxième cavité photoacoustique 11-2 ;
- des premier et deuxième capillaires C1 et C2 permettant de faire communiquer les volumes des première et deuxième cavités photoacoustiques 11-1 et 11-2 entre eux, de manière à former une cavité photoacoustique résonante de type Helmholtz différentielle 11' ;
- un premier microphone M1 et un deuxième microphone M2.

Le dispositif photoacoustique 10' comporte préférentiellement un canal d'entrée T1 permettant d'amener le gaz dans les première et deuxième cavités photoacoustiques 11-1 et 11-2 via le premier capillaire C1, et un canal de sortie T2 permettant d'évacuer le gaz hors des première et deuxième cavités photoacoustiques 11-1 et 11-2 via le deuxième capillaire C2. La source S est couplée à la première cavité photoacoustique 11-1. Le gaz à détecter est destiné à être excité, dans la première cavité photoacoustique 11-1, par le faisceau lumineux émis par la source S. Chacune des première et deuxième cavités photoacoustiques 11-1, 11-2 peut être couplée à un ou plusieurs microphones. Dans l'exemple de la figure 6, la première cavité photoacoustique 11-1 est couplée au premier microphone M1 et la deuxième cavité photoacoustique 11-2 est couplée au deuxième microphone M2. Un miroir T15 est agencé autour de la première cavité photoacoustique 11-1 ; ce point est décrit plus en détail par la suite, en lien avec la figure 5a'.

Les figures 3a, 3b et 3c montrent des premier, deuxième et troisième modes de réalisation possibles de la cavité photoacoustique 11 du dispositif photoacoustique 10 de la figure 2a, permettant chacun d'obtenir un découplage entre la fonction mécanique de confinement du gaz et de l'onde acoustique et la fonction optique de confinement du rayonnement lumineux.

Selon le premier mode de réalisation de la figure 3a, l'épaisseur e12 de la paroi latérale 12 est choisie en fonction de la profondeur de pénétration $\delta$ d'une onde thermique provenant du miroir 15 dans le matériau transparent de la paroi latérale 12, de manière qu'une telle onde thermique soit atténuée avant de parvenir au sein de la cavité 11. La profondeur de pénétration $\delta$ est définie par :

$$\delta = \sqrt{2\alpha/\omega}$$

où $\alpha$ la diffusivité thermique du matériau transparent de la paroi latérale 12 et $\omega$ la pulsation de la source de lumière S.

L'épaisseur e12 est préférentiellement telle que :

$$\delta \leq e12$$

En effet, l'amplitude d'une onde thermique diminue en se propageant dans un matériau et on constate qu'une onde thermique provenant du miroir 15 et se propageant dans le matériau transparent de la paroi latérale 12 subit une atténuation en amplitude de 1 - exp(-1), soit environ 63% avant de parvenir dans la cavité 11, pour une distance de propagation de $\delta$ dans le matériau transparent de la paroi latérale 12.

L'épaisseur e12 est plus préférentiellement telle que :

$$2\pi\delta \leq e12$$

En effet, on constate qu'une onde thermique provenant du miroir 15 et se propageant dans le matériau transparent de la paroi latérale 12 subit une atténuation en amplitude de 1 - exp(-2π), soit environ 99,8% avant de parvenir dans la cavité 11, pour une distance de propagation de $2\pi\delta$ dans le matériau transparent de la paroi latérale 12. La figure 6 est un graphique de l'évolution de la température d'un matériau chauffé à sa surface, en fonction de la profondeur dans le matériau. On constate qu'au-delà d'une certaine profondeur, la température ne varie pas. La figure 7 est un graphique de l'évolution de la profondeur de pénétration d'une onde thermique au sein de différents matériaux, à savoir l'air, le silicium et l'acier, en fonction de la fréquence d'une source thermique chauffant lesdits matériaux. On constate que plus la fréquence de la source thermique augmente, plus la profondeur de pénétration diminue.

Il n'est pas utile que l'épaisseur e12 de la paroi latérale 12 soit supérieure à $10\delta$ car au-delà de cette épaisseur, l'atténuation est quasi-totale ou totale et ne s'améliore plus significativement ou plus du tout. On préfère donc ne pas augmenter l'épaisseur e12 de la paroi latérale 12 au-delà de $10\delta$ pour conserver une cavité photoacoustique 11 la plus miniature possible. L'épaisseur e12 de la paroi latérale 12 est donc préférentiellement telle que :

$$e12 \leq 10\delta$$

Toujours selon le premier mode de réalisation, l'épaisseur e13 de la première extrémité 13 et l'épaisseur e14 de la deuxième extrémité 14 sont inférieures à l'épaisseur e12 de la paroi latérale 12. Les épaisseurs e13, e14 des première et deuxième extrémités 13, 14 sont typiquement identiques mais peuvent également être distinctes. Selon le premier mode de réalisation, préférentiellement aucun miroir n'est agencé sur la surface externe 13b de la première extrémité 13, qui forme la fenêtre d'entrée, et préférentiellement aucun miroir n'est agencé sur la surface externe 14b de la deuxième extrémité 14, qui forme une fenêtre de sortie.

Selon le deuxième mode de réalisation de la figure 3b, à la fois l'épaisseur e12 de la paroi latérale 12 et l'épaisseur e14 de la deuxième extrémité e14 sont choisies en fonction de la profondeur de pénétration $\delta$ d'une onde thermique provenant du miroir 15 dans le matériau transparent de la paroi latérale 12, de manière qu'une telle onde thermique soit atténuée avant de parvenir au sein de la cavité 11. Selon le deuxième mode de réalisation, l'épaisseur e12 de la paroi latérale 12 et l'épaisseur e14 de la deuxième extrémité e14 sont typiquement identiques mais peuvent également être distinctes.

Pour les mêmes raisons que précédemment détaillées en lien avec le premier mode de réalisation, l'épaisseur e12 de la paroi latérale et l'épaisseur e14 de la deuxième extrémité 14 sont préférentiellement telles que :

$$\delta \leq e12 \; ; \; \delta \leq e14$$

et plus préférentiellement telles que :

$$2\pi\delta \leq e12 \; ; \; 2\pi\delta \leq e14$$

Par ailleurs, pour les mêmes raisons que précédemment détaillées en lien avec le premier mode de réalisation, l'épaisseur e12 de la paroi latérale et l'épaisseur e14 de la deuxième extrémité 14 sont préférentiellement telles que :

$$e12 \leq 10\delta \; ; \; e14 \leq 10\delta$$

Toujours selon le deuxième mode de réalisation, l'épaisseur e13 de la première extrémité 13 est inférieure à l'épaisseur e12 de la paroi latérale 12 et à l'épaisseur e14 de la deuxième extrémité 14. Selon le deuxième mode de réalisation, préférentiellement aucun miroir n'est agencé sur la surface externe 13b de la première extrémité 13 qui forme la fenêtre d'entrée, et un miroir est préférentiellement agencé sur la surface externe 14b de la deuxième extrémité 14, qui n'est donc pas une fenêtre de sortie. Par rapport au premier mode de réalisation, on permet ainsi une augmentation du chemin optique parcouru par le rayonnement lumineux au sein de la cavité photoacoustique.

Selon le troisième mode de réalisation de la figure 3c, à la fois l'épaisseur e12 de la paroi latérale 12, l'épaisseur e13 de la première extrémité 13 et l'épaisseur e14 de la deuxième extrémité e14 sont choisies en fonction de la profondeur de pénétration $\delta$ d'une onde thermique provenant du miroir 15 dans le matériau transparent de la paroi latérale 12, de manière qu'une telle onde thermique soit atténuée avant de parvenir au sein de la cavité 11. Selon le troisième mode de réalisation, l'épaisseur e12 de la paroi latérale 12 et les épaisseurs e13, e14 des première et deuxième extrémités 13, 14 sont typiquement identiques mais peuvent également être distinctes.

Pour les mêmes raisons que précédemment détaillées en lien avec le premier mode de réalisation, l'épaisseur e12 de la paroi latérale et les épaisseurs e13, e14 des première et deuxième extrémités 13, 14 sont préférentiellement telles que :

$$\delta \leq e12 \; ; \; \delta \leq e13 \; ; \; \delta \leq e14$$

et plus préférentiellement telles que :

$$2\pi\delta \leq e12 \; ; \; 2\pi\delta \leq e13 \; ; \; 2\pi\delta \leq e14$$

Par ailleurs, pour les mêmes raisons que précédemment détaillées en lien avec le premier mode de réalisation, l'épaisseur e12 de la paroi latérale et les épaisseurs e13, e14 des première et deuxième extrémités 13, 14 sont préférentiellement telles que :

$$e12 \leq 10\delta \; ; \; e13 \leq 10\delta \; ; \; e14 \leq 10\delta$$

Selon le troisième mode de réalisation, un miroir est préférentiellement agencé sur une partie de la surface externe 13b de la première extrémité 13 et un miroir est préférentiellement agencé sur la surface externe 14b de la deuxième extrémité 14. Le miroir n'est pas agencé sur toute la surface externe 13b de la première extrémité 13 de manière que la source de lumière S demeure couplée avec la première extrémité 13, pour l'introduction du rayonnement lumineux dans la cavité photoacoustique. Par rapport aux premier et deuxième modes de réalisation, on permet ainsi une augmentation du chemin optique parcouru par le rayonnement lumineux au sein de la cavité photoacoustique.

Dans chacun des premier, deuxième et troisième modes de réalisation qui viennent d'être décrits en lien avec les figures 3a, 3b et 3c, la première extrémité 13 et/ou la deuxième extrémité 14 peuvent être rapportées sur le dispositif, c'est-à-dire qu'elles peuvent être réalisées indépendamment de la paroi latérale de la cavité puis fixées, par exemple collées, de part et d'autre de la paroi latérale de la cavité. Cela peut présenter un intérêt afin de réaliser la première extrémité 13 et/ou la deuxième extrémité 14 dans un matériau distinct du matériau de la paroi latérale de la cavité. Par exemple, la première extrémité 13 et/ou la deuxième extrémité 14 peuvent être réalisées en BaF2 tandis que la paroi latérale est réalisée en un autre matériau tel que de la silice, du silicium ou du germanium. Cela peut également présenter un intérêt afin d'équiper directement la première extrémité 13 et/ou la deuxième extrémité 14 d'une couche antireflet.

Les premier, deuxième et troisième modes de réalisation, ainsi que la variante selon laquelle la première extrémité et/ou la deuxième extrémité sont rapportées sur le dispositif, ont été décrits pour la cavité photoacoustique 11 du dispositif photoacoustique 10 de la figure 2a mais sont également compatibles avec chacune des première et deuxième cavités photoacoustiques 11-1, 11-2 du dispositif photoacoustique 10' de la figure 2b.

Le dispositif photoacoustique 10 selon le mode de réalisation décrit en lien avec la figure 2a est préférentiellement obtenu par une technologie de fabrication de microsystème électromécanique MEMS. Un tel procédé de fabrication est décrit ci-après. La technologie MEMS permet notamment l'obtention d'une cavité photoacoustique de forme parallélépipédique. La figure 4a montre une vue en coupe, selon une coupe A-A représentée à la figure 3a, d'un exemple de géométrie parallélépipédique pour la cavité photoacoustique 11. La technologie MEMS permet également l'obtention d'une cavité photoacoustique de forme cylindrique. La figure 4b montre une vue en coupe, selon la coupe A-A, d'un exemple de de géométrie cylindrique pour la cavité photoacoustique 11. Selon la technologie de fabrication de microsystème électromécanique MEMS, on grave la cavité photoacoustique dans des galettes ou « wafers », c'est pourquoi la forme externe reste parallélépipédique même lorsque la cavité interne est de géométrie cylindrique. La cavité interne de géométrie cylindrique étant typiquement obtenue par gravure chimique isotrope d'un matériau cristallin comme le silicium, le cylindre obtenu n'est pas parfait. Une géométrie cylindrique plus régulière peut être obtenue grâce à des technologies d'usinage ou d'impression 3D. La géométrie cylindrique présente l'avantage d'être acoustiquement plus favorable que la géométrie parallélépipédique. La géométrie parallélépipédique présente l'avantage d'être obtenue selon un procédé MEMS plus simple que pour la géométrie cylindrique. Les exemples de géométrie des figures 4a et 4b sont également valables pour les première et deuxième cavités photoacoustiques 11-1, 11-2, formant la cavité photoacoustique résonante de type Helmholtz différentielle 11' du dispositif photoacoustique 10'.

Le dispositif photoacoustique 10' selon le mode de réalisation alternatif décrit en lien avec la figure 2b est également préférentiellement obtenu par une technologie de fabrication de microsystème électromécanique MEMS, telle que décrite cidessus. Chacune des première et deuxième cavités photoacoustiques 11-1 et 11-2 de la cavité photoacoustique résonante de type Helmholtz différentielle 11' peut en particulier présenter une géométrie parallélépipédique, telle qu'illustrée à la figure 4a, ou cylindrique, telle qu'illustrée à la figure 4b.

Indépendamment de la géométrie interne de la cavité photoacoustique 11, la paroi latérale 12 de la cavité photoacoustique 11 présente un profil parallélépipédique avec une surface externe 12b ayant quatre faces externes 12b1, 12b2, 12b3 et 12b4 et le miroir 15 est préférentiellement agencé sur au moins deux faces externes opposées, et encore plus préférentiellement agencé sur chacune des quatre faces externes. Dans le dispositif selon l'invention, le miroir 15 est agencé sur les deux faces horizontales 12b1 et 12b3 de la surface externe.

La figure 5a montre ainsi un exemple d'une configuration dans laquelle les première et troisième faces externes 12b1, 12b3 sont recouvertes par le miroir 15, tandis que les deuxième et quatrième faces externes 12b2, 12b4 ne sont pas recouvertes par le miroir 15. Cette configuration est compatible avec n'importe quel type de géométrie interne, parallélépipédique ou cylindrique, pour la cavité photoacoustique 11 ainsi avec chaque mode de réalisation des figures 3a, 3b et 3c. Lorsque deux faces externes opposées sont ainsi recouvertes d'un miroir, des calculs optiques par lancer de rayon ont montré une amélioration significative de l'ordre de 15% du signal photoacoustique utile par rapport à une configuration mono-passage, sans augmentation du signal parasite de paroi grâce au découplage thermique. L'exemple de configuration de la figure 5a, décrit pour la cavité photoacoustique 11 du dispositif photoacoustique 10 de la figure 2a, est également compatible avec chacune des première et deuxième cavités photoacoustiques 11-1, 11-2 du dispositif photoacoustique 10' de la figure 2b.

La figure 5b montre un exemple d'une configuration dans laquelle, en plus des première et troisième faces externes 12b1, 12b3, les deuxième et quatrième faces externes 12b2, 12b4 sont également recouvertes par le miroir 15. La deuxième extrémité 14 peut également être recouverte par le miroir 15. Cette configuration est compatible avec n'importe quel type de géométrie interne, parallélépipédique ou cylindrique, pour la cavité photoacoustique 11 ainsi qu'avec chaque mode de réalisation des figures 3a, 3b et 3c. Lorsque les quatre faces externes sont ainsi recouvertes d'un miroir, des calculs optiques par lancer de rayon ont montré une amélioration significative de l'ordre de 80% du signal photoacoustique utile par rapport à une configuration mono-passage, sans augmentation du signal parasite de paroi grâce au découplage thermique. L'exemple de configuration de la figure 5b, décrit pour la cavité photoacoustique 11 du dispositif photoacoustique 10 de la figure 2a, est également compatible avec chacune des première et deuxième cavités photoacoustiques 11-1, 11-2 du dispositif photoacoustique 10' de la figure 2b.

L'exemple de configuration de la figure 5b, selon lequel les quatre faces externes 12b1, 12b2, 12b3, 12b4 de la paroi latérale 12 sont recouvertes par le miroir 15, peut par exemple être fabriqué par une technique d'impression 3D, mais pas par une technologie microsystème électromécanique MEMS. La figure 5a' montre un perfectionnement de la première configuration de la figure 5a, permettant une amélioration significative de l'ordre de 80% du signal photoacoustique utile par rapport à une configuration mono-passage sans augmentation du signal parasite de paroi grâce à un découplage thermique, et pouvant être fabriqué par une technologie microsystème électromécanique MEMS. Selon ce perfectionnement, et selon l'invention, en plus du miroir 15 recouvrant les première et troisième faces 12b1, 12b3 horizontales de la surface externe 12b, un miroir T15 est agencé parallèlement, à une distance mesurée selon l'axe $\vec{y}$ égale à l'épaisseur e12, aux faces verticales 12b2 et 12b4 de la surface externe 12b de la paroi latérale 12.

Le miroir T15 peut également être agencé parallèlement, à une distance mesurée selon l'axe $\vec{x}$ égale à l'épaisseur e12, à la deuxième extrémité verticale 14 : dans ce cas, il présente une forme de U. Ce perfectionnement est également compatible avec chacune des première et deuxième cavités photoacoustiques 11-1, 11-2 du dispositif photoacoustique 10' de la figure 2b - en particulier la première cavité photoacoustique 11-1, comme illustré sur la figure 2b.

Un procédé de fabrication 100 d'un dispositif photoacoustique conforme à un aspect de l'invention au moyen d'une technologie microsystème électromécanique MEMS est à présent décrit, en lien avec la figure 8 qui montre un diagramme des différentes étapes, et avec les figures 9a1' à 9g qui illustrent schématiquement les différentes étapes. Le procédé de fabrication 100 permet l'obtention d'un dispositif photoacoustique miniature, ayant par exemple une cavité photoacoustique de 5 ou 8 mm de longueur, par exemple de forme parallélépipédique avec une section de 0,6 mm × 0,4 mm.

Selon une première sous-étape 101', obligatoire selon l'invention, du procédé de fabrication 100, représentée aux figures 9a1' et 9a2', des première et deuxième tranchées sont gravées, respectivement dans des première et deuxième galettes (« wafer » en anglais) g1, g2. La gravure est une gravure profonde, par exemple une gravure ionique réactive profonde DRIE (de l'anglais « Deep Reactive Ion Etching »). Puis selon une deuxième sous-étape 101", obligatoire selon l'invention, du procédé de fabrication 100, représentée aux figures 9a1" et 9a2", une couche d'un réflecteur, par exemple un métal, est déposée sur les première et deuxième galettes g1, g2 de manière à remplir les première et deuxième tranchées, puis un polissage mécano-chimique est effectué afin de ne conserver que le réflecteur T15a, T15b remplissant les première et deuxième tranchées.

Selon une première étape 101 du procédé de fabrication 100, représentée aux figures 9b1 et 9b2, une première demi-cavité 11a est gravée dans la première galette g1 (figure 9b1), et une deuxième demi-cavité 11b est gravée dans la deuxième galette g2 (figure 9b2).

Les première et deuxième galettes g1, g2 sont réalisées en un matériau transparent qui peut être du silicium, du germanium, de la silice, du phosphure d'indium InP ou du nitrure d'aluminium AlN. Dans la suite, on prend l'exemple où les première et deuxième galettes g1, g2 sont en silicium. Chaque galette de silicium g1, g2 présente typiquement une épaisseur standard de 550 $\mu$m, ou alternativement une épaisseur standard de 725 $\mu$m. La gravure est une gravure profonde, par exemple une gravure ionique réactive profonde DRIE (de l'anglais « Deep Reactive Ion Etching »). Dans le cas d'une cavité photoacoustique en silicium et pour une source thermique de fréquence 10 kHz, la profondeur de pénétration $\delta$ est de 80 $\mu$m donc une épaisseur de quelques centaines de $\mu$m pour la paroi latérale de la cavité photoacoustique finalement obtenue, par exemple une épaisseur comprise entre 400 et 600 $\mu$m, convient. Si l'on souhaite une épaisseur de paroi de 400 $\mu$m, il est ainsi possible d'utiliser deux galettes de silicium standard de 550 $\mu$m d'épaisseur ; si l'on souhaite une épaisseur de 600 $\mu$m, on peut utiliser deux galettes de silicium standard de 725 $\mu$m d'épaisseur.

Les figures 9b1' et 9b2' montrent respectivement une vue de dessus des figures 9b1 et 9b2, lorsque les première et deuxième sous-étapes 101', 101" de réalisation d'une tranchée remplie de réflecteur ont eu lieu avant la première étape 101.

Selon une deuxième étape 102 du procédé de fabrication 100, représentée à la figure 9c, une couche antireflet AR, par exemple une couche de nitrure de silicium, est préférentiellement déposée sur les flancs de la première demi-cavité 11a. La couche antireflet AR peut être mise en place par un dépôt conforme, par exemple un dépôt chimique en phase vapeur réalisé à pression sous-atmosphérique LPCVD (de l'anglais « Low-pressure chemical vapor déposition »), suivi d'une gravure anisotrope afin de retirer les parties horizontales. La couche antireflet AR est de préférence déposée uniquement sur les surfaces interne et externe de l'extrémité devant assurer une fonction de fenêtre d'entrée du rayonnement lumineux. La deuxième étape 102 est optionnelle, elle peut ne pas être réalisée.

Selon une troisième étape 103 du procédé de fabrication 100, représentée à la figure 9d, les première et deuxième galettes g1, g2 gravées sont assemblées par collage moléculaire de manière à former, à partir des première et deuxième demi-cavités 11a et 11b, la cavité photoacoustique 11 entière. Ainsi que précédemment décrit, la cavité photoacoustique 11 ainsi formée présente la première extrémité 13, la deuxième extrémité 14 et la paroi latérale 12 entre les première et deuxième extrémités 13, 14. La paroi latérale 12 présente la surface interne 12a et la surface externe 12b. Le collage moléculaire permet de réaliser un scellement C entre les première et deuxième galettes g1, g2 gravées.

Selon une quatrième étape 104 du procédé de fabrication 100, représentée à la figure 9e, le miroir 15, par exemple une couche métallique, est déposé sur la surface externe 12b de la paroi latérale 12 de la cavité photoacoustique 11, par exemple par une technique de dépôt chimique en phase vapeur CVD (de l'anglais « chemical vapor déposition »), ou par une technique de dépôt physique en phase vapeur PVD (de l'anglais « physical vapor déposition »), ou par une technique de dépôt par évaporation sous vide.

Selon une cinquième étape 105 du procédé de fabrication 100, représentée à la figure 9f, le miroir 15 est structuré par gravure locale, de manière à créer dans le miroir 15 au moins une première structuration s1, destiné à réaliser une première ouverture assurant la connectique avec le microphone M, une deuxième structuration s2 destinée à réaliser une deuxième ouverture formant une entrée de gaz dans la cavité photoacoustique, et une troisième structuration non représentée, destinée à réaliser une troisième ouverture formant une sortie de gaz de la cavité photoacoustique. D'une manière générale, au moins trois structurations sont réalisées, mais un nombre plus important de structurations peut tout à fait être réalisé en fonction notamment du nombre et des caractéristiques de chaque microphone : une ou plusieurs structurations peuvent par exemple être requises pour assurer des reprises de contact électrique.

Selon une sixième étape 106 du procédé de fabrication 100, représentée à la figure 9g, la paroi latérale 12 de la cavité photoacoustique 11 est structurée par gravure profonde à l'aplomb des première, deuxième et troisième structurations s1, s2 du miroir 15, de manière à former une première ouverture o1 à l'aplomb de la première structuration s1, une deuxième ouverture o2 à l'aplomb de la deuxième structuration s2 et une troisième ouverture non représentée à l'aplomb de la troisième structuration. Contrairement aux première, deuxième et troisième structurations s1, s2 du miroir 15, les première, deuxième et troisième ouvertures o1, o2 de la paroi latérale 12 débouchent dans la cavité photoacoustique 11. La première ouverture o1 est destinée à assurer la connectique avec le microphone M. La deuxième ouverture o2 est destinée à former une entrée de gaz et la troisième ouverture est destinée à former une sortie de gaz.

La figure 10 montre une représentation schématique d'un dispositif photoacoustique de détection de gaz susceptible d'être obtenu par le procédé de fabrication de la figure 8, en omettant les sous-étapes 101' et 101". La cavité photoacoustique 11 et la source de lumière S reposent sur une embase E. Le microphone M est couplé avec la première ouverture o1 de la paroi latérale 12 de la cavité photoacoustique 11. Un tube T peut être agencé dans la deuxième ouverture o2 de manière à faciliter l'entrée d'un gaz dans la cavité photoacoustique 11. Un autre tube non représenté peut être agencé dans la troisième ouverture de manière à contrôler la sortie du gaz de la cavité photoacoustique 11.

**Revendications**

1. Dispositif photoacoustique (10, 10') de détection de gaz comportant :

   - une première cavité photoacoustique (11, 11-1) ayant une paroi latérale (12) s'étendant entre une première extrémité (13) et une deuxième extrémité (14) et présentant une surface interne (12a) et une surface externe (12b) ;
   - un miroir (15) agencé sur au moins une partie de la surface externe (12b) de la paroi latérale (12) de la première cavité photoacoustique ;
   - une source de lumière (S) apte à émettre un rayonnement lumineux fournissant une énergie d'excitation à un gaz contenu dans la première cavité photoacoustique (11), le rayonnement lumineux étant modulé à une pulsation $\omega$, la source de lumière (S) étant couplée à la première extrémité (13) de la première cavité photoacoustique (11), la première cavité photoacoustique étant réalisée en un matériau transparent au rayonnement de la source de lumière (S) ;
- un premier microphone (M, M1) couplé à la paroi latérale (12) de la première cavité photoacoustique (11),

le dispositif étant **caractérisé en ce que** :

- le matériau transparent au rayonnement lumineux de la source de lumière (S) choisi parmi la silice, le silicium, le germanium, le phosphure d'indium ou le nitrure d'aluminium ;
- la paroi latérale (12) de la première cavité photoacoustique présente une épaisseur e12 qui est choisie en fonction de la profondeur de pénétration $\delta$ d'une onde thermique provenant du miroir (15) dans ledit matériau transparent, de manière qu'une telle onde thermique soit atténuée avant de parvenir au sein de la première cavité photoacoustique (11), la profondeur de pénétration $\delta$ étant définie par

$$\delta = \sqrt{2\alpha/\omega}$$

avec $\alpha$ la diffusivité thermique du matériau transparent et $\omega$ la pulsation de la source de lumière (S) ;
- la surface externe (12b) de la paroi latérale (12) de la première cavité photoacoustique (11, 11-1) est de forme parallélépipédique, et le miroir (15) est agencé sur les deux faces horizontales (12b1, 12b3) de la surface externe (12b) de la paroi latérale (12) de la première cavité photoacoustique (11, 11-1) et un deuxième miroir (T15) est étant agencé parallèlement, à une distance égale à l'épaisseur e12, aux deux faces verticales (12b2, 12b4) de la surface externe (12b) de la paroi latérale (12) de la première cavité photoacoustique (11, 11-1).

2. Dispositif photoacoustique (10, 10') selon la revendication précédente **caractérisé en ce que** l'épaisseur e12 de la paroi latérale (12) est telle que :

$$e12 \geq \delta$$

3. Dispositif photoacoustique (10, 10') selon la revendication précédente **caractérisé en ce que** l'épaisseur e12 de la paroi latérale (12) est telle que :

$$e12 \geq 2\pi\delta$$

4. Dispositif photoacoustique (10, 10') selon l'une quelconque des revendications 2 ou 3 **caractérisé en ce que** l'épaisseur e12 de la paroi latérale (12) est telle que :

$$e12 \leq 10\delta$$

5. Dispositif photoacoustique (10, 10') selon l'une quelconque des revendications précédentes, **caractérisé en ce que** la première cavité photoacoustique (11, 11-1) comporte une première couche antireflet (AR) agencée sur au moins une partie de la surface externe (13b) de sa première extrémité (13), et/ou une deuxième couche antireflet (AR) agencée sur au moins une partie de la surface interne (13a) de sa première extrémité (13).

6. Dispositif photoacoustique (10, 10') selon l'une quelconque des revendications précédentes, **caractérisé en ce que** la source de lumière (S) émet un rayonnement lumineux ayant une divergence supérieure ou égale à 20°.

7. Dispositif photoacoustique (10, 10') selon l'une quelconque des revendications précédentes, **caractérisé en ce que** la source de lumière (S) est une source laser à cascade quantique QCL.

8. Dispositif photoacoustique (10, 10') selon l'une quelconque des revendications précédentes, **caractérisé en ce que** la première cavité photoacoustique (11) présente une longueur, mesurée entre les surfaces internes (13a, 14a) des première et deuxième extrémités (13, 14), inférieure à 5 cm, préférentiellement inférieure à 3 cm, plus préférentiellement inférieure à 2 cm, encore plus préférentiellement inférieure à 1 cm.

9. Dispositif photoacoustique (10') selon l'une quelconque des revendications précédentes, **caractérisé en ce qu'**il comporte en outre :

- une deuxième cavité photoacoustique (11-2) et des premier et deuxième capillaires (C1, C2) permettant de faire communiquer les volumes des première et deuxième cavités photoacoustiques (11-1, 11-2) entre eux de manière à former une cavité photoacoustique résonante de type Helmholtz différentielle (11') ;
- un deuxième microphone (M2) couplé à la deuxième cavité photoacoustique (11-2).

10. Dispositif photoacoustique (10') selon la revendication précédente, **caractérisé en ce qu'**il comporte un canal d'entrée (T1) permettant d'amener le gaz dans les première et deuxième cavités photoacoustiques (11-1, 11-2) via le premier capillaire (C1) et un canal de sortie (T2) permettant d'évacuer le gaz hors des première et deuxième cavités photoacoustiques (11-1, 11-2) via le deuxième capillaire (C2).

**11.** Procédé de fabrication (100) d'un dispositif photoacoustique (10) selon l'une quelconque des revendications précédentes comportant les étapes suivantes :

- une première étape (101) selon laquelle une première demi-cavité (11a) est gravée dans une première galette (g1) du matériau transparent au rayonnement lumineux de la source de lumière (S) choisi parmi la silice, le silicium, le germanium, le phosphure d'indium ou le nitrure d'aluminium et une deuxième demi-cavité (11b) est gravée dans une deuxième galette (g2) du matériau transparent ;

- une deuxième étape (103) selon laquelle les première et deuxième galettes (g1, g2) gravées sont assemblées de manière à former, à partir des première et deuxième demi-cavités (11a, 11b), une première cavité photoacoustique de forme parallélépipédique (11) entière présentant une première extrémité (13), une deuxième extrémité (14) et une paroi latérale (12) entre les première et deuxième extrémités (13, 14), la paroi latérale (12) présentant une surface interne (12a) et une surface externe (12b) ;

- une troisième étape (104) selon laquelle un miroir est déposé sur la surface externe (12b) de la paroi latérale (12) de la première cavité photoacoustique (11), le miroir étant agencé sur les deux faces horizontales de la surface externe de la paroi latérale de la première cavité photoacoustique ;

- une quatrième étape (105) selon laquelle le miroir (15) est structuré par gravure locale de manière à créer dans le miroir (15) au moins une première structuration (s1), une deuxième structuration (s2) et une troisième structuration ;

- une cinquième étape (106) selon laquelle la paroi latérale (12) de la première cavité photoacoustique (11) est structurée par gravure profonde à l'aplomb des première et deuxième structurations (s1, s2) du miroir (15), de manière à former une première ouverture (o1) à l'aplomb de la première structuration (s1), une deuxième ouverture (o2) à l'aplomb de la deuxième structuration (s2) et une troisième ouverture à l'aplomb de la troisième structuration, les première, deuxième et troisième ouvertures (o1, o2) débouchant dans la première cavité photoacoustique (11)

- l'épaisseur e12 de la paroi latérale étant choisie en fonction de la profondeur de pénétration $\delta$ d'une onde thermique provenant du miroir (15) dans ledit matériau transparent, de manière qu'une telle onde thermique soit atténuée avant de parvenir au sein de la première cavité photoacoustique (11), la profondeur de pénétration $\delta$ étant définie par :

$$\delta = \sqrt{2\alpha/\omega}$$

avec $\alpha$ la diffusivité thermique du matériau transparent et $\omega$ la pulsation de la source de lumière (S),

- la source de lumière (S) étant couplée à la première extrémité (13) de la première cavité photoacoustique (11) et le premier microphone (M, M1) étant couplé à la paroi latérale (12) de la première cavité photoacoustique (11),

ledit procédé comportant en outre, préalablement à la première étape (101) :

- une première sous-étape (101') selon laquelle une première tranchée est gravée dans la première galette (g1) et une deuxième tranchée est gravée dans la deuxième galette (g2) ;

- une deuxième sous-étape (101") selon laquelle une couche d'un réflecteur est déposée sur les première et deuxième galettes (g1, g2) de manière à remplir les première et deuxième tranchées, puis un polissage mécano-chimique est effectué afin de ne conserver que le réflecteur (T15a, T15b) remplissant les première et deuxième tranchées, de manière à réaliser le deuxième miroir (T15) agencé parallèlement, à une distance égale à l'épaisseur e12, aux deux faces verticales de la surface externe de la paroi latérale de la première cavité photoacoustique.

**Patentansprüche**

**1.** Photoakustische Vorrichtung (10, 10') zum Nachweis von Gasen, umfassend:

- einen ersten photoakustischen Hohlraum (11, 11-1) mit einer Seitenwand (12), die sich zwischen einem ersten Ende (13) und einem zweiten Ende (14) erstreckt und eine Innenfläche (12a) und eine Außenfläche (12b) aufweist;

- einen Spiegel (15), der an mindestens einem Teil der Außenfläche (12b) der Seitenwand (12) des ersten photoakustischen Hohlraums angeordnet ist;

- eine Lichtquelle (S), die geeignet ist, Lichtstrahlung auszusenden, die einem in dem ersten photoakustischen Hohlraum (11) enthaltenen Gas Anregungsenergie liefert, wobei die Lichtstrahlung mit einem Puls $\omega$ moduliert wird, wobei die Lichtquelle (S) mit dem ersten Ende (13) des ersten photoakustischen Hohlraums (11) gekoppelt ist, wobei der erste photoakustische Hohlraum aus einem Material hergestellt ist, das für die Strahlung der Lichtquelle (S) transparent ist;
- ein erstes Mikrofon (M, M1), das mit der Seitenwand (12) des ersten photoakustischen Hohlraums (11) gekoppelt ist, wobei die Vorrichtung **dadurch gekennzeichnet ist, dass**:

- das für die Lichtstrahlung der Lichtquelle (S) transparente Material aus Siliziumdioxid, Silizium, Germanium, Indiumphosphid oder Aluminiumnitrid ausgewählt ist;
- die Seitenwand (12) des ersten photoakustischen Hohlraums eine Dicke e12 aufweist, die in Abhängigkeit von der Eindringtiefe $\delta$ einer vom Spiegel (15) ausgehenden Wärmewelle in das transparente Material gewählt wird, so dass eine solche Wärmewelle gedämpft wird, bevor sie innerhalb des ersten photoakustischen Hohlraums (11) ankommt, wobei die Eindringtiefe $\delta$ definiert ist durch:

$$\delta = \sqrt{2\alpha/\omega}$$

wobei $\alpha$ die thermische Diffusivität des transparenten Materials und $\omega$ die Pulsation der Lichtquelle (S) ist;
- die Außenfläche (12b) der Seitenwand (12) des ersten photoakustischen Hohlraums (11, 11-1) quaderförmig ist, und der Spiegel (15) an den beiden horizontalen Flächen (12b1, 12b3) der Außenfläche (12b) der Seitenwand (12) des ersten photoakustischen Hohlraums (11, 11-1) angeordnet ist und ein zweiter Spiegel (T15) parallel in einem Abstand, der gleich der Dicke e12 ist, zu den beiden vertikalen Flächen (12b2, 12b4) der Außenfläche (12b) der Seitenwand (12) des ersten photoakustischen Hohlraums (11, 11-1) angeordnet ist.

2. Photoakustische Vorrichtung (10, 10') nach dem vorhergehenden Anspruch, **dadurch gekennzeichnet, dass** die Dicke e12 der Seitenwand (12) so ist, dass:

$$e12 \geq \delta$$

3. Photoakustische Vorrichtung (10, 10') nach dem vorhergehenden Anspruch, **dadurch gekennzeichnet, dass** die Dicke e12 der Seitenwand (12) so ist, dass:

$$e12 \geq 2\pi\delta$$

4. Photoakustische Vorrichtung (10, 10') nach einem der Ansprüche 2 oder 3, **dadurch gekennzeichnet, dass** die Dicke e12 der Seitenwand (12) so ist, dass:

$$e12 \leq 10\delta$$

5. Photoakustische Vorrichtung (10, 10') nach einem der vorhergehenden Ansprüche, **dadurch gekennzeichnet, dass** der erste photoakustische Hohlraum (11,11-1) eine erste Antireflexionsschicht (AR) aufweist, die auf mindestens einem Teil der Außenfläche (13b) ihres ersten Endes (13) angeordnet ist, und/oder eine zweite Antireflexionsschicht (AR), die auf mindestens einem Teil der Innenfläche (13a) ihres ersten Endes (13) angeordnet ist.

6. Photoakustische Vorrichtung (10, 10') nach einem der vorhergehenden Ansprüche, **dadurch gekennzeichnet, dass** die Lichtquelle (S) eine Lichtstrahlung mit einer Divergenz von größer oder gleich 20° aussendet.

7. Photoakustische Vorrichtung (10, 10') nach einem der vorhergehenden Ansprüche, **dadurch gekennzeichnet, dass** die Lichtquelle (S) ein Quantenkaskadenlaser QCL ist.

8. Photoakustische Vorrichtung (10, 10') nach einem der vorhergehenden Ansprüche, **dadurch gekennzeichnet, dass** der erste photoakustische Hohlraum (11) eine Länge, gemessen zwischen den Innenflächen (13a, 14a) des ersten und zweiten Endes (13, 14), von weniger als 5 cm, bevorzugt weniger als 3 cm, noch bevorzugter weniger als 2 cm, und noch bevorzugter weniger als 1 cm, aufweist.

9. Photoakustische Vorrichtung (10') nach einem der vorhergehenden Ansprüche, **dadurch gekennzeichnet, dass** sie zudem umfasst:

- einen zweiten photoakustischen Hohlraum (11-2) und erste und zweite Kapillare (C1, C2), die es ermöglichen, die Volumen des ersten und des zweiten photoakustischen Hohlraums (11-1, 11-2) miteinander zu verbinden, um einen resonanten photoakustischen Hohlraum des Typs Helmholtz-Differential (11') zu bilden;
- ein zweites Mikrofon (M2), das mit dem zweiten photoakustischen Hohlraum (11-2) gekoppelt ist.

10. Photoakustische Vorrichtung (10') nach dem vorhergehenden Anspruch, **dadurch gekennzeichnet, dass** sie einen Einlasskanal (T1) zum Zuführen von Gas in den ersten und zweiten photoakustischen Hohlraum (11-1, 11-2) über die erste Kapillare (C1) und einen Auslasskanal (T2) zum Abführen des Gases aus dem ersten und zweiten photoakustischen Hohlraum (11-1, 11-2) über die zweite Kapillare (C2) aufweist.

11. Fertigungsverfahren (100) einer photoakustischen Vorrichtung (10) nach einem der vorausgehenden Ansprüche, das die folgenden Schritte umfasst:

- einen ersten Schritt (101), bei dem eine erste Halbkavität (11a) in einen ersten Wafer (g1) des für die Lichtstrahlung der Lichtquelle (S) transparenten Materials, das aus Siliziumdioxid, Silizium, Germanium, Indiumphosphid oder Aluminiumnitrid ausgewählt ist, geätzt wird und eine zweite Halbkavität (11b) in einen zweiten Wafer (g2) des transparenten Materials geätzt wird;
- einen zweiten Schritt (103), bei dem die ersten und zweiten geätzten Wafer (g1, g2) so zusammengesetzt werden, dass sie ausgehend von der ersten und zweiten Halbkavität (11a, 11b) eine erste ganze quaderförmige photoakustische Kavität (11) bilden, die ein erstes Ende (13), ein zweites Ende (14) und eine Seitenwand (12) zwischen dem ersten und dem zweiten Ende (13, 14) aufweist, wobei die Seitenwand (12) eine Innenfläche (12a) und eine Außenfläche (12b) aufweist;
- einen dritten Schritt (104), bei dem ein Spiegel auf der Außenfläche (12b) der Seitenwand (12) des ersten photoakustischen Hohlraums (11) angebracht wird, wobei der Spiegel auf beiden horizontalen Flächen der Außenfläche der Seitenwand des ersten photoakustischen Hohlraums angeordnet ist;
- einen vierten Schritt (105), bei dem der Spiegel (15) durch lokales Ätzen so strukturiert wird, dass im Spiegel (15) mindestens eine erste Strukturierung (s1), eine zweite Strukturierung (s2) und eine dritte Strukturierung entstehen;
- einen fünften Schritt (106), bei dem die Seitenwand (12) des ersten photoakustischen Hohlraums (11) durch tiefes Ätzen lotrecht zu der ersten und zweiten Strukturierung (s1, s2) des Spiegels (15) strukturiert wird, um eine erste Öffnung (o1) lotrecht zu der ersten Strukturierung (s1) zu bilden, eine zweite Öffnung (o2) lotrecht zur zweiten Strukturierung (s2) und eine dritte Öffnung lotrecht zur dritten Strukturierung, wobei die erste, zweite und dritte Öffnung (o1, o2) in den ersten photoakustischen Hohlraum (11) münden;
- wobei die Dicke e12 der Seitenwand in Abhängigkeit von der Eindringtiefe $\delta$ einer vom Spiegel (15) ausgehenden Wärmewelle in das transparente Material so gewählt wird, dass eine solche Wärmewelle gedämpft wird, bevor sie im Innenraum des ersten photoakustischen Hohlraums (11) eintrifft, wobei die Eindringtiefe $\delta$ definiert

ist durch:

$$\delta = \sqrt{2\alpha/\omega}$$

wobei $\alpha$ die thermische Diffusivität des transparenten Materials und $\omega$ die Pulsation der Lichtquelle (S) ist,

- wobei die Lichtquelle (S) mit dem ersten Ende (13) des ersten photoakustischen Hohlraums (11) gekoppelt ist und das erste Mikrofon (M, M1) mit der Seitenwand (12) des ersten photoakustischen Hohlraums (11) gekoppelt ist,

wobei das Verfahren außerdem vor dem ersten Schritt (101) umfasst:

- einen ersten Unterschritt (101'), bei dem ein erster Graben in den ersten Wafer (g1) geätzt wird und ein zweiter Graben in den zweiten Wafer geätzt wird
- einen zweiten Unterschritt (101"), bei dem eine Schicht aus einem Reflektor auf den ersten und zweiten Wafer (g1, g2) aufgebracht wird, um den ersten und zweiten Graben zu füllen, und dann ein chemischmechanisches Polieren durchgeführt wird, um nur den Reflektor (T15a, T15b) zu bewahren, der den ersten und den zweiten Graben füllt, um den zweiten Spiegel (T15) zu realisieren, der in einem der Dicke e12 entsprechenden Abstand parallel zu beiden vertikalen Flächen der Außenfläche der Seitenwand des ersten photoakustischen Hohlraums angeordnet ist.

**Claims**

1. Photoacoustic device (10, 10') for detecting gas comprising:

- a first photoacoustic cavity (11, 11-1) having a side wall (12) extending between a first end (13) and a second end (14) and having an inner surface (12a) and an outer surface (12b);
- a mirror (15) arranged on at least one portion of the outer surface (12b) of the side wall (12) of the first photoacoustic cavity;
- a light source (S) suitable for emitting a light radiation supplying an excitation energy to a gas contained in the first photoacoustic cavity (11), the light radiation being modulated at a pulse $\omega$, the light source (S) being coupled to the first end (13) of the first photoacoustic cavity (11), the first photoacoustic cavity being made of a material transparent to the radiation of the light source (S);
- a first microphone (M, M1) coupled to the side wall (12) of the first photoacoustic cavity (11),

the device being **characterised in that**:

- the material transparent to the light radiation of the light source (S) is selected from silica, silicon, germanium, indium phosphide or aluminium nitride;
- the side wall (12) of the first photoacoustic cavity has a thickness e12 which is chosen as a function of the depth of penetration $\delta$ of a thermal wave coming from the mirror (15) into said transparent material, in such a way that such a thermal wave is attenuated before arriving within the first photoacoustic cavity (11), the depth of penetration $\delta$ being defined by:

$$\delta = \sqrt{2\alpha/\omega}$$

with $\alpha$ the thermal diffusivity of the transparent material and $\omega$ the pulse of the light source (S);
- the outer surface (12b) of the side wall (12) of the first photoacoustic cavity (11, 11-1) is of parallelepiped shape and the mirror (15) is arranged on the two horizontal faces (12b1, 12b3) of the outer surface (12b) of the side wall (12) of the first photoacoustic cavity (11, 11-1) and a second mirror (T15) is arranged parallel, at a distance equal to the thickness e12, to the two vertical faces (12b2, 12b4) of the outer surface (12b) of the side wall (12) of the first photoacoustic cavity (11, 11-1).

2. Photoacoustic device (10, 10') according to the preceding claim **characterised in that** the thickness e12 of the side wall (12) is such that:

$$e12 \geq \delta$$

3. Photoacoustic device (10, 10') according to the preceding claim **characterised in that** the thickness e12 of the side wall (12) is such that:

$$e12 \geq 2\pi\delta$$

4. Photoacoustic device (10, 10') according to any of claims 2 or 3 **characterised in that** the thickness e12 of the side wall (12) is such that:

$$e12 \leq 10\delta$$

5. Photoacoustic device (10, 10') according to any of the preceding claims, **characterised in that** the first photoacoustic cavity (11, 11-1) comprises a first antireflective layer (AR) arranged on at least one portion of the outer surface (13b) of its first end (13), and/or a second antireflective layer (AR) arranged on at least one portion of the inner surface (13a) of its first end (13).

6. Photoacoustic device (10, 10') according to any of the preceding claims, **characterised in that** the light source (S) emits a light radiation having a divergence greater than or equal to 20°.

7. Photoacoustic device (10, 10') according to any of the preceding claims, **characterised in that** the light source (S) is a quantum cascade laser QCL source.

8. Photoacoustic device (10, 10') according to any of the preceding claims, **characterised in that** the first photoacoustic cavity (11) has a length, measured between the inner surfaces (13a, 14a) of the first and second ends (13, 14), less than 5 cm, preferentially less than 3 cm, more preferentially less than 2 cm, even more preferentially less than 1 cm.

9. Photoacoustic device (10') according to any of the preceding claims, **characterised in that** it further comprises:

- a second photoacoustic cavity (11-2) and first and second capillaries (C1, C2) enabling the volumes of the first and second photoacoustic cavities (11-1, 11-2) to communicate with each other so as to form a resonant photoacoustic cavity of differential Helmholtz type (11');
- a second microphone (M2) coupled to the second photoacoustic cavity (11-2).

10. Photoacoustic device (10') according to the preceding claim, **characterised in that** it comprises an inlet channel (T1) making it possible to bring the gas into the first and second photoacoustic cavities (11-1, 11-2) via the first capillary (C1) and an outlet channel (T2) making it possible to evacuate the gas outside of the first and second photoacoustic cavities (11-1, 11-2) via the second capillary (C2).

11. Method for manufacturing (100) a photoacoustic device (10) according to any of the preceding claims comprising the following steps:

- a first step (101) according to which a first half-cavity (11a) is etched in a first wafer (g1) of the material transparent to the light radiation of the light source (S) selected from silica, silicon, germanium, indium phosphide or aluminium nitride and a second half-cavity (11b) is etched in a second wafer (g2) of the transparent material;
- a second step (103) according to which the first and second etched wafers (g1, g2) are assembled so as to form, from the first and second half-cavities (11a, 11b), a whole first photoacoustic cavity (11) of parallelepiped shape having a first end (13), a second end (14) and a side wall (12) between the first and second ends (13, 14), the side wall (12) having an inner surface (12a) and an outer surface (12b);
- a third step (104) according to which a mirror is deposited on the outer surface (12b) of the side wall (12) of the first photoacoustic cavity (11), the mirror being arranged on the two horizontal faces of the outer surface of the side wall of the first photoacoustic cavity ;
- a fourth step (105) according to which the mirror (15) is structured by local etching so as to create in the mirror (15) at least a first structuring (s1), a second structuring (s2) and a third structuring;
- a fifth step (106) according to which the side wall (12) of the first photoacoustic cavity (11) is structured by deep etching directly in line with the first and second structurings (s1, s2) of the mirror (15), so as to form a first opening (o1) directly in line with the first structuring (s1), a second opening (o2) directly in line with the second structuring (s2) and a third opening directly in line with the third structuring, the first, second and third openings (o1, o2) emerging into the first photoacoustic cavity (11);
- the thickness e12 of the side wall being chosen as a function of the depth of penetration $\delta$ of a thermal wave coming from the mirror (15) into said transparent material, in such a way that such a thermal wave is attenuated before arriving within the first acoustic cavity (11), the depth of penetration $\delta$ being defined by:

$$\delta = \sqrt{2\alpha/\omega}$$

with $\alpha$ the thermal diffusivity of the transparent material and $\omega$ the pulse of the light source (S),
- the light source (S) being coupled to the first end (13) of the first photoacoustic cavity (11) and the first microphone (M) being coupled to the side wall (12) of the first photoacoustic cavity (11),

said method further comprising, prior to the first step (101):

- a first sub-step (101') according to which a first trench is etched in the first wafer (g1) and a second trench is etched in the second wafer (g2);
- a second sub-step (101") according to which a layer of a reflector is deposited on the first and second wafers (g1, g2) so as to fill the first and second trenches, then a chemical mechanical planarization is carried out in order to only conserve the reflector (T15a, T15b) filling the first and second trenches, in a manner to make the second mirror (T15) arranged parallel, at a distance equal to the thickness e12, to the two vertical faces of the outer surface of the side wall of the first photoacoustic cavity.

**Fig. 1 – Art antérieur**

**Fig. 2a**

**Fig. 2b**

**Fig. 3a**

**Fig. 3b**

**Fig. 3c**

Fig. 4a

Fig. 4b

Fig. 5a

Fig. 5b

Fig. 5a'

**Fig. 6**

**Fig. 7**

100

```
┌ ─ ─ ─ ─ ─ ─ ┐
¦   - 101' -   ¦
└ ─ ─ ─│─ ─ ─ ┘
        ↓
┌ ─ ─ ─ ─ ─ ─ ┐
¦   - 101'' -  ¦
└ ─ ─ ─│─ ─ ─ ┘
        ↓
┌─────────────┐
│   - 101 -   │
└──────│──────┘
        ↓
┌─────────────┐
│   - 102 -   │
└──────│──────┘
        ↓
┌─────────────┐
│   - 103 -   │
└──────│──────┘
        ↓
┌─────────────┐
│   - 104 -   │
└──────│──────┘
        ↓
┌─────────────┐
│   - 105 -   │
└──────│──────┘
        ↓
┌─────────────┐
│   - 106 -   │
└─────────────┘
```

**Fig. 8**

**Fig. 9a1'**

**Fig. 9a2'**

**Fig. 9a1''**

**Fig. 9a2''**

**Fig. 9b1**

**Fig. 9b2**

**Fig. 9b1'**

**Fig. 9b2'**

102

AR    AR    11a    AR    AR

g1

**Fig. 9c**

103

12a    12b    g2

13    14

C    C

AR    AR    AR    AR

- 11 -

g1    12

**Fig. 9d**

104

12    15

13    14

C

AR

- 11 -

15

**Fig. 9e**

**Fig. 9f**

**Fig. 9g**

**Fig. 10**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3017950 A1
- WO 2017044436 A1
- FR 2599505 A1
- EP 1211501 A1
- US 2008204757 A1
- EP 2515096 A1
- US 7304732 B1

**Littérature non-brevet citée dans la description**

- **S. NICOLETTI et al.** Challenges in the realization of a fully integrated optical lab-on-chip. *Proc. IEEE Sensors,* 2014, 649-652